# EUROPÄISCHE PATENTANMELDUNG

(11) **EP 1 628 435 A1**
(43) Veröffentlichungstag der Anmeldung: **22.02.2006**
(21) Anmeldenummer: 04019751.9
(22) Anmeldetag: 19.08.2004
(51) Int. Cl.: H04L 12/28

(54) **Kontaktvermittlungssystem**

(71) Anmelder: Blue Message Systems Ltd., Jersey, JE4 8SD, Channel Islands (GB)
(72) Erfinder: Paton, Alan, London SW14 7NZ (GB); Greulich, Christian, 13407 Berlin (DE); Rager, Philipp-Boris, 14193 Berlin (DE)
(74) Vertreter: Lippich, Wolfgang

(57) **Zusammenfassung**

Ein Kontaktvermittlungssystem (1) ist aus zwei oder mehr Mobilkommunikations-Endgeräten (2) gebildet. Diese sind dazu eingerichtet, wenn sie in gegenseitige Reichweite gelangen, über direkten Funkkontakt in Ad-hoc-Kommunikation zu treten. Bei der Ad-hoc-Kommunikation werden ein oder mehrere Kurzprofile (16) vom einen zum anderen Endgerät (2) übersendet, wonach eine Akzeptanzprüfung des oder der gesendeten Kurzprofile (16) erfolgt und, bei deren positivem Ausgang, eine weitergehende Kommunikation veranlaßt wird. Die Endgeräte (2) sind für eine Dienstentdeckung gemäß eines Dienstentdeckungsprozesses eingerichtet. Die Übersendung des oder der Kurzprofile (16) im Rahmen des Dienstentdeckungsprozesses erfolgt als Dienstattributdaten in Antwort auf den Erhalt einer Dienstanfrage.

## Beschreibung

### GEBIET DER ERFINDUNG

Die vorliegende Erfindung bezieht sich allgemein auf Kontaktvermittlung zwischen Mobilkommunikations-Endgeräten, und beispielsweise auf ein Kontaktvermittlungssystem, ein zur Kontaktvermittlung geeignetes Mobilkommunikations-Endgerät sowie ein Computerprogramm, welches einem Endgerät die Kontaktvermittlungs-Funktion verleiht.

### HINTERGRUND DER ERFINDUNG

Ad-hoc-Netzwerktechnologien haben in den letzten Jahren zunehmend Verbreitung gefunden, und zwar vor allem die sog. Bluetooth-Technologie sowie die Wireless-LAN-Technologie (Bluetooth® ist ein lokales Datenfunksystem, welches seit 1998 von einer "Special Interest Group" verschiedener Firmen spezifiziert wird, siehe z.B. Specification of the Bluetooth System, Version 1.1 vom 22 Februar 2001; die derzeit gebräuchlichste Wireless-LAN-Technologie ist gemäß IEEE 802.11 standardisiert). Bei solchen Ad-hoc-Netzwerktechnologien kann ein Mobilkommunikations-Endgerät, welches in die Reichweite eines anderen derartigen Endgeräts gelangt, mit diesem ad-hoc, d.h. ohne jeweilige Konfigurationsmaßnahmen seitens des Benutzers in Kommunikation treten. Seit einiger Zeit sind auch Mobiltelefone für zellulären Mobilfunk (z.B. GSM, UMTS) erhältlich, welche zusätzlich zu ihrem Zellularfunk-Sende-Empfangsteil ein Bluetooth-Sende-Empfangsteil aufweisen. Dies ist hauptsächlich dafür gedacht, das Mobiltelefon kabellos mit anderen Geräten vernetzen zu können, beispielsweise mit einem tragbaren Computer (der hierdurch ein "Funkmodem" z.B. für mobilen Intemetzugang erhält), oder mit einem drahtlos angebundenen Headset (Kopfhörer-Mikrofon-Kombination) zum freihändigen Telefonieren mit dem Mobiltelefon.

Es ist auch schon vorgeschlagen worden, daß zwei in Bluetooth-Reichweite befindliche Zellularmobilfunk-Endgeräte direkt über ihre Bluetooth-Sende-Empfangs-Teile miteinander kommunizieren (also unter Nichtverwendung des üblichen Mobilfunkwegs, der in diesem Fall vom einen Mobiltelefon zur Basisstation der betreffenden Funkwellen und zurück von derselben oder einer benachbarten Basisstation zu dem anderen, in der Nähe befindlichen Mobiltelefon führen würde).

Aufgrund der Fähigkeit der Bluetooth-Technologie zur Ad-hoc-Kommunikation gibt es auch bereits Vorschläge, Kommunikation zwischen Teilnehmern herbeizuführen, die sich noch nicht kennen und beispielsweise nur zufällig und unwissentlich in gemeinsame Reichweite für die Ad-hoc-Kommunikation gelangen. Beispielsweise schlägt die DE 101 49 496 A1 (nach welcher der Oberbegriff des Anspruchs 1 gebildet wurde) ein "Kontaktanbahnungssystem" vor, bei dem Mobiltelefone für zellulären Mobilfunk über ihre zusätzlich vorhandenen Bluetooth-Sende-Empfangsteile in Direktkommunikation treten können. Zur Beschränkung des Verkehrs ist diese Kommunikation zweistufig aufgebaut; in einer ersten Stufe erfolgt nur die Übersendung eines Kurzprofils seitens des Sende-Endgeräts. Diese erfolgt z.B. zusammen mit einer Gerätekennung des Sende-Endgeräts. Falls das Kurzprofil und die Geräteerkennung bestimmte Kriterien erfüllen, die in dem Empfangs-Endgerät gespeichert sind, kann dieses in einer zweiten Stufe ein sog. Detailprofil (oder, altemativ, eine Autorisierung zum Abruf eines solchen Detailprofils) zurücksenden. In der Druckschrift ist nicht näher angegeben, wie dieses Kommunikationsprotokoll auf der Bluetooth-Ebene ablaufen soll; es scheint aber klar, daß, um das Kurzprofil zu übersenden, auf der Bluetooth-Ebene zunächst eine Paarung (sog. Pairing) zwischen den beiden Endgeräten hergestellt wird, die dann auch für die ggf. anschließende Übersendung des Detailprofils genutzt werden kann.

Ähnliche, ebenfalls zweistufig arbeitende Kontaktvermittlungssysteme sind aus den Druckschriften DE 199 29 186 A1 sowie DE 199 29 189 A1 bekannt.

Auch die DE 102 18 801 A1 offenbart ein Direktkommunikationssystem für mit Bluetooth-Sende-Empfangsteilen ausgestatteten Zellularmobilfunk-Endgeräten. Als Nachteil ist dort genannt, daß aufgrund der relativ geringen Reichweite der Bluetooth-Ad-hoc-Netzwerke (i.a. weniger als 100 m) die Anzahl der über direkten Funkkontakt erreichbaren Teilnehmer relativ gering sei. Zur Vergrößerung der Anzahl erreichbarer Teilnehmer wird vorgeschlagen, daß Kontaktprofile vom einen zum anderen Teilnehmer nicht nur zum Zweck einer Kontaktaufnahmeentscheidung mit ggf. anschließender Kontaktaufnahme übersendet werden, sondern auch zum Zweck einer Weiterpropagierung des jeweiligen Profils. Hierzu speichert das empfangende Endgerät Profile, und sendet diese - wenn es ggf. später in Reichweite anderer Teilnehmer gelangt - an diese anderen Teilnehmer weiter.

Die Bluetooth-Technologie ist beispielsweise in dem Buch J. Wollert: "Das Bluetooth Handbuch", Franzis Verlag, 2002, beschrieben, siehe insbesondere S. 15-46 ("Übersicht"), S. 47-119 (Core-Protokolle) und S. 164-174 (Service Discovery Protocol). Das Service Discovery Protocol ist spezifiziert in "Specification of the Bluetooth System", Version 1.1, 22 February 2001, S. 331-392. Eine Darstellung der Wireless-LAN-Technologie findet sich z.B. in A. Tanenbaum, "Computer Networks", 4. Auflage, 2003, S. 68-71 und S. 292-302.

### ZUSAMMENFASSUNG DER ERFINDUNG

Die Erfindung betrifft ein Kontaktvermittlungssystem, das aus zwei oder mehr Mobilkommunikations-Endgeräten gebildet ist. Diese sind dazu eingerichtet, wenn sie in gegenseitige Reichweite gelangen, über direkten Funkkontakt in Ad-hoc-Kommunikation zu treten. Bei der Ad-hoc-Kommunikation werden ein oder mehrere Kurzprofile vom einen zum anderen Endgerät übersendet, wonach eine Akzeptanzprüfung des oder der gesendeten Kurzprofile erfolgt und, bei deren positivem Ausgang, eine weitergehende Kommunikation veranlaßt wird. Die Endgeräte sind für eine Dienstentdeckung gemäß eines Dienstentdeckungsprozesses eingerichtet. Die Übersendung des oder der Kurzprofile im Rahmen des Dienstentdeckungsprozesses erfolgt als Dienstattributdaten in Antwort auf den Erhalt einer Dienstanfrage.

Ein weiterer Aspekt betrifft ein Mobilkommunikations-Endgerät, das zur Teilnahme in einem Kontaktvermittlungssystem der obigen Art ausgebildet ist.

Ein weiterer Aspekt betrifft ein Computerprogramm, das auf einem Datenträger gespeichert ist oder in Form einer Signalfolge vorliegt, welche zur Übersendung an ein Mobilkommunikations-Endgerät geeignet ist. Das Computerprogramm verleiht einem Mobilkommunikations-Endgerät beim Ablauf auf diesem die Funktion eines Endgerät in einem Kontaktvermittlungssystem der obigen Art.

Weitere Merkmale sind in den offenbarten Vorrichtungen und Verfahren enthalten oder gehen für den fachmännischen Leser aus der folgenden detaillierten Beschreibung von Ausführungsformen und den angefügten Zeichnungen hervor.

### BESCHREIBUNG DER ZEICHNUNG

Ausführungsformen der Erfindung werden nun beispielhaft und unter Bezugnahme auf die angefügte Zeichnung beschrieben, in der:
Fig. 1 eine schematische Darstellung der Kommunikationspartner sowie der Kommunikationswege in einem Kontaktvermittlungssystem darstellt;
Fig. 2 ein Schichtungsschema von Client und Server zur ebenen bezogenen Veranschaulichung des Kommunikationsvorgangs zeigt;
Fig. 3 die Kommunikation zwischen Client und Server sowie die Prozessierungsvorgänge im Client und Server anhand eines Timing-Diagramms veranschaulicht;
Fig. 4 ein abstraktes Architekturdiagramm einer Kontaktvermittlungs-Applikation in einem Endgerät ist;
Fig. 5 eine Veranschaulichung einer Dienstregistrierungsdatenbasis darstellt;
Fig. 6 ein Profilschema und das zu diesem gehörende Kurzprofil veranschaulicht;
Fig. 7 eine Ausführungsform veranschaulicht, bei der Fremdprofile weiterpropagiert werden.
Fig. 8 die Reichweite mobiler Endgeräte veranschaulicht.

### BESCHREIBUNG DER BEVORZUGTEN AUSFÜHRUNGSFORMEN

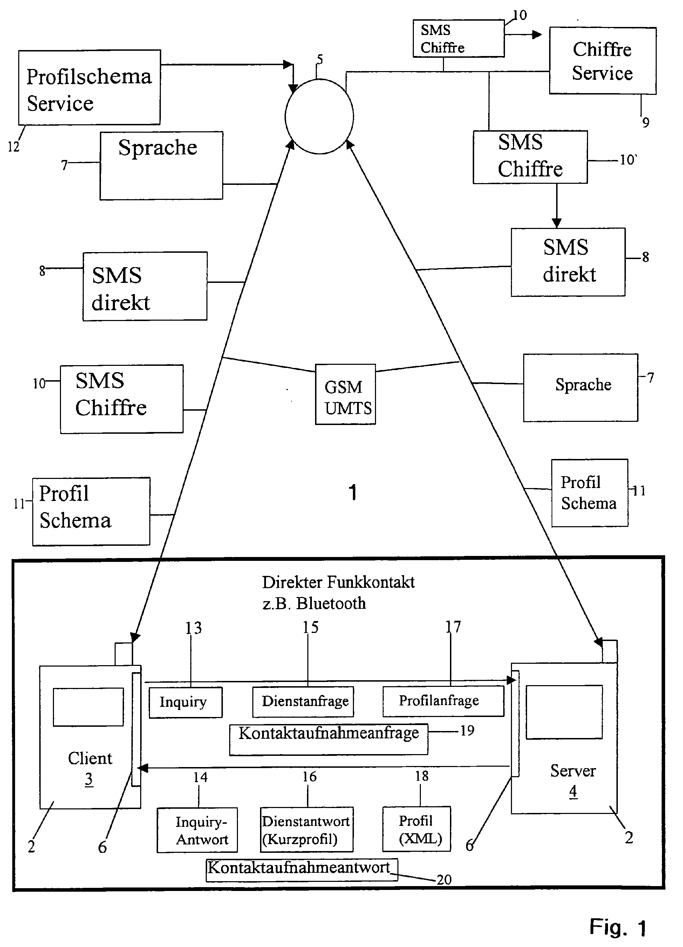

Fig. 1 veranschaulicht die Kommunikationspartner und Kommunkationswege in einem Kontaktvermittlungssystem. Vor einer detaillierten Beschreibung der Fig. 1 folgen zunächst verschiedene Erläuterungen zu den Ausführungsformen.

Die Ausführungsformen betreffen Mobilkommunikations-Endgeräte, welche über direkten Funkkontakt in Ad-hoc-Kommunikation treten können. Typischerweise ist dieser direkte Funkkontakt relativ kurzreichweitig, übliche Reichweiten liegen beispielsweise (je nach verwendeter Technologie und Ausbreitungsbedingungen für die Funkwellen) im Bereich von einigen 10-100 m. Bei einigen Ausführungsformen erfolgt die Ad-hoc-Kommunikation auf der Grundlage der Bluetooth-Technologie; andere Ausführungsformen beruhen auf einem Wireless-LAN-Protokoll, z.B. gemäß dem Standard IEEE802.11 (bei noch weiteren Ausführungsformen kann ein Endgerät auch dazu eingerichtet sein, wahlweise sowohl über Bluetooth als auch über WLAN Ad-hoc-Kommunikation zu betreiben).

Bei den Ausführungsformen sind die Endgeräte für eine Dienstentdeckung gemäß eines Dienstentdeckungsprozesses eingerichtet. Beispielsweise bei den Bluetooth-Ausführungsformen handelt es sich hierbei um das Service Discovery Protocol (SDP), das durch die Bluetooth Special Interest Group spezifiziert wurde (beispielsweise in der Version 1.1 vom 22. Februar 2001). Wie der Name bereits sagt, dient das SDP in der Bluetooth-Technologie hauptsächlich der Dienstentdeckung; d.h. es soll einem Bluetooth-Gerät ermöglichen, herauszufinden, ob ein anderes, in Reichweite befindliches Bluetooth-Gerät einen bestimmten Dienst zur Verfügung stellt (oder allgemeiner, herauszufinden, welche Dienste das andere Gerät zur Verfügung stellt). An einem Beispiel sei dies erläutert: Ursprünglich war eine der beabsichtigten Anwendungen der Bluetooth-Technologie die kabellose Verbindung von Geräten, wie Computern und deren Ein- und Ausgabegeräten, in einer Büroumgebung. Zwar können zwei derartige Geräte mit Hilfe des sog. Linkmanagers eine Verbindung zueinander aufbauen, sie erhalten aber auf der Ebene des Linkmanagers keine Information darüber, welche Dienste von dem jeweils anderem Gerät zur Verfügung gestellt werden. Beispielsweise für einen neu eingetretenen Laptop-Computer, der an einen Drucker angeschlossen werden soll, stellt sich aber die Frage, welcher Drucker in der Umgebung ist und was für (Druck-) Dienste dieser anbietet. Mit Hilfe von SDP kann der Laptop nun die gewünschte Information von den in der Reichweite befindlichen Geräten einholen, nämlich z.B. ob es sich unter ihnen überhaupt ein Drucker befindet und welche Druckdienste dieser ggf. leisten kann. Bei den Ausführungsformen geht es jedoch um eine andere Verwendung der Ad-hoc-Kommunikationstechologie (z.B. Bluetooth oder WLAN), nämlich um ein Kontaktvermittlungssystem, welches auf speziell eingerichteten Mobilkommunikations-Endgeräten beruht. Und zwar sind diese Endgeräte dazu eingerichtet, wenn sie in gegenseitige Reichweite gelangen, über direkten Funkkontakt in eine besondere Art von Ad-hoc-Kommunikation zu treten, bei der ein oder mehrere Kurzprofile von einem zum anderen übersendet werden, wonach eine Akzeptanzprüfung des oder der gesendeten Kurzprofile erfolgt und, bei positivem Ausgang der Akzeptanzprüfung eine - unten näher erläuterte - weitergehende Kommunikation veranlaßt wird.

Bei einigen Ausführungsformen handelt es sich bei den Endgeräten um Mobilkommunikations-Endgeräte zur Funkkommunikation in einem oder mehreren zellulären Mobilfunknetzen (z.B. GSM- oder UMTS-Mobiltelefone). Die Fähigkeit zur Kontaktvermittlung über direkten Funkkontakt ist somit eine Zusatzfunktion dieser zellulären Mobilfunkgeräte.

Im vorliegenden Rahmen wurde nun erkannt, daß die in Ad-hoc-Kommunikationstechnologien, wie der Bluetooth-Technologie, vorgesehene Dienstentdeckungsfähigkeit der genannten Kontaktvermittlung zwischen Mobilkommunikations-Endgeräten zunutze gemacht werden kann. Solche Dienstentdeckungsprozesse sehen üblicherweise - und so z.B. auch bei Bluetooth - vor, daß ein Endgerät, welches von einem anderen Gerät eine entsprechende Dienstanfrage erhält, diese durch Rücksendung von Dienstattributdaten beantwortet. Im vorliegenden Rahmen eine Kontaktvermittlungssystems wurde erkannt, daß die Übersendung des oder der Kurzprofile im Rahmen des Dienstentdeckungsprozesses in Form von Dienstattributdaten in Antwort auf den Erhalt einer Dienstanfrage erfolgen kann.

Bei einem Kontaktvermittlungsvorgang hat eines der Endgeräte die Funktion eines Clients, der eine Kontaktanfrage aussendet, und ein anders Endgerät die Funktion eines Servers, der die Anfrage bedient (d.h. beantwortet). Grundsätzlich ist es möglich, daß eines der Endgeräte nur als Client und das andere nur als Server fungieren kann (oder daß es - obwohl es im Prinzip beide Funktionen übernehmen könnte - vom Benutzer so konfiguriert ist, daß es nur als Client bzw. Server fungiert). Bei anderen Ausführungsformen sind die Endgeräte jedoch so eingerichtet, daß sie quasi simultan als Client und Server fungieren können. Beispielsweise kann ein solches Endgerät laufend Kontaktvermittlungs-Anfragen an andere Geräte aussenden (also als Client fungieren) und gleichzeitig Kontaktvermittlungsanfragen anderer Geräte bedienen (also als Server fungieren). Bei einigen Ausführungsformen sind die beiden, in ein und demselben Endgerät bereitgestellten Funktionen durch verschiedene Prozesse realisiert, nämlich durch einen Client- und einen Serverprozeß. Diese Prozesse sind nebenläufig (es versteht sich, daß die Endgeräte typischerweise nur mit einem Prozessor und einem Sende-Empfangs-Teil für direkten Funkkontakt ausgerüstet sein werden, so daß die beiden Prozesse nicht im strengen Sinne gleichzeitig ablaufen - gemeint ist hier, daß sie abwechselnd mit einer ausreichend häufigem Wechsel ablaufen, so daß beim Benutzer der Eindruck eines im wesentlichen gleichzeitigen Ablaufs entsteht).

Bekannte Ad-hoc-Kommunikationstechnologien sehen die Möglichkeit vor, daß ein Gerät durch die Aussendung einer Anwesenheitsanfrage in Reichweite befindliche andere Endgeräte entdecken kann; bei der Bluetooth-Technologie dient hierzu das sog. Inquiry. Bei einem Ad-hoc-Netzwerk wird üblicherweise zwischen Geräten, die miteinander kommunizieren können sollen, eine Verbindung (bei Bluetooth auch "Link" genannt) aufgebaut, wodurch ein Kanal belegt wird. Bei Bluetooth wird beispielsweise der Vielfachzugriff auf die gemeinsame Luftschnittstelle (der in Schicht 2a ISO-OSI-Referenzmodells erfolgt) durch ein Frequenzsprungverfahren mit Zeitmultiplex geregelt. Hierzu verwenden die in einer Verbindung stehenden Geräte eine bestimmte, vorher vereinbarte Frequenzsprungsequenz, wozu die Uhren der verbundenen Geräte zu synchronisieren sind. Jedoch kennen Geräte, die neu in die Reichweite eines anderen Geräts kommen, weder ein solches gemeinsames Sprungschema noch gemeinsames Timing. Damit sich solche Geräte überhaupt entdecken können, sind in Ad-hoc-Netzwerktechnologien spezielle Kommunikationsmuster vorgesehen, welche keine derartigen Vereinbarungen, wie Sprungmuster und Timing, voraussetzen. Bei Bluetooth ist beispielsweise für das Inquiry ein spezielles Sprungmuster fest vordefiniert. Endgeräte, die bereit sind, auf Anwesenheitsanfragen zu antworten, horchen innerhalb eines sog. Inquiry-Scan-Intervall in bestimmten Zeitslots, ob ein anderes Endgerät ein Inquiry eingeleitet hat, und senden ggf. eine Anwesenheitsantwort, ein sog. FHS-Paket zurück. Aus dem FHS-Paket erhält das anfragende Endgerät die Timinginformation des angefragten Endgeräts.

Bei den Ausführungsformen ist das Endgerät (bzw. die Endgeräte) mit Kontaktvermittlungs-Clientfunktion dazu eingerichtet, laufend Anwesenheitsfragen auszusenden, um in Reichweite befindliche andere Endgeräte zu entdecken (wie oben ausgeführt wurde, können die Endgeräte mit Clientfunktion zeitgleich auch als Server für andere Clientgeräte fungieren). Da eine Anwesenheitsanfrage typischerweise höchstens wenige Sekunden (z.B. 1 bis 2 Sekunden) dauert, kann "laufend" beispielsweise bedeuten, daß z.B. alle 10 Sekunden bis 5 Minuten eine Anwesenheitsanfrage ausgesendet wird. Da manche Endgeräte während der Aussendung einer Anwesenheitsanfrage "taub" für Anwesenheitsanfragen anderer Geräte sind, könnte bei einer zufälligen Synchronität zweier, sowohl als Client wie auch als Server fungierend Endgeräte eine gegenseitige Blockierung eintreten, mit der Folge, daß sich diese Endgeräte nicht entdecken könnten. Zur Vermeidung einer solchen Blockierung ist bei manchen der Ausführungsformen vorgesehen, daß die Endgeräte mit Clientfunktion die Zeitabstände zwischen den von ihnen abgesetzten Anwesenheitsanfragen zufallsvariieren.

Bei den Ausführungsformen sendet das Client-Endgerät nach Entdeckung eines anderen Endgeräts (aufgrund dessen Anwort auf die vom Client-Endgerät zuvor ausgesendete Anwesenheitsanfrage) an dieses die - auf die Kontaktvermittlung bezogene - Dienstanfrage, woraufhin das entdeckte, nun als Server fungierende Endgerät das oder die bei ihm gespeicherten Kurzprofile als Dienstattributdaten zurücksendet. Bei Bluetooth ist jedem Dienst, den ein Gerät anbietet, eine sog. Dienstklasse zugeordnet. Jede Dienstklasse hat eine universelle eindeutige Kennung (UUID - Universal Unique Identifier), welche bei Bluetooth beispielsweise eine 128-Bit-Zahl ist. Jeder Dienstklassenkennung (genauer gesagt jedem von der Dienstklassenkennung identifizierten Instanz einer Dienstklasse, genannt "Service Record") können bei Bluetooth Daten zugeordnet sein, die die Eigenschaften des betreffenden Dienstes beschreiben; diesen werden Dienstattribute genannt. Ein Dienstattribut umfaßt bei Bluetooth eine Attributkennung und Attributwerte, die zur Erreichung von Systemunabhängigkeit durch im Bluetooth-Standard vorgeschriebenen Datentypen und Attributgrößen zu beschreiben sind. Im Bluetooth-Standard sind verschiedene Dienstklassen für bestimmte Standarddienste fest vordefiniert (die zugehörigen Dienstklassenkennungen sind also bereits vergeben), wohingegen eine Reihe von Dienstklassenkennungen nicht fest vorbelegt sind und z.B. für Nicht-Standarddienste frei genutzt werden können. Bei den vorliegenden Ausführungsformen wird eine dieser freien Dienstleistungskennungen für den hier interessierenden "Kontaktvermittlungsdienst" verwendet; im folgenden wird diese Dienstklassenkennung "KVD" genannt.

Im Bluetooth-SDP sind verschiedene Arten von Dienstentdeckungsanfragen vorgesehen, die jeweils durch Versendung einer entsprechenden PDU (Protocol Data Unit) repräsentiert sind. Die verschiedenen PDUs unterscheiden sich im wesentlichen durch die "Datentiefe", die der serverseitige SDP-Prozess auf eine Anfrage hin zurücksendet. So gibt es z.B. eine PDU, bei der, falls der angefragte Dienst vom Server angeboten wird, dieser nur eine Referenz auf alle Records vom SDP-Prozess zurücksendet. Bei einer anderen - hier interessierenden - PDU sendet der SDP-Prozess, falls er den angefragten Dienst anbietet, die bei ihm unter der betreffenden Dienstklassenkennung gespeicherten Dienstattributdaten als Antwort auf die Dienstanfrage an den Client zurück. Bei den vorliegenden Ausführungsformen sendet der Client also eine Dienstanfrage nach der Dienstklasse mit der Dienstklassenkennung "KVD" an den Server, und zwar durch Übersendung derjenigen PDU, welche den Server zur Rücksendung der bei ihm unter dieser Dienstkennung gespeicherten Dienstattributdaten. Der Server untersucht im Rahmen von SDP, ob er den Dienst "KVD" anbietet, und sendet im positiven Fall die KVD-Dienstattributdaten an den Client zurück. Die zurückgesendeten Dienstattributdaten sind die beim Server gespeicherten, zur Aussendung an anfragende Teilnehmer des Kontaktvermittlungssystem freigegebene Kurzprofile. Beispielsweise bildet jedes Kurzprofil ein Dienstattribut (mit einer eigenen Dienstattributkennung). Sofern nur ein Kurzprofil gespeichert ist, übersendet der Server entsprechend nur ein Dienstattribut, im Fall mehrerer Kurzprofile übersendet er entsprechend mehrere Dienstattribute.

Eine Verbindung zwischen zwei oder mehreren Endgeräten im Bluetooth-Protokoll, auch "Paarung" (Pairing) genannt, beinhaltet nicht nur eine Abstimmung hinsichtlich Timing und Sprungsequenz der betreffenden Endgeräte, sondern umfaßt auch die Einigung auf einen Verbindungscode, und daneben ggf. Authentifizierung, Verschlüsselung etc.. Bei den Ausführungsformen sind die Endgeräte im Rahmen der Dienstanfrage-Kommuniktion (d.h. bei der Aussendung der Dienstanfrage und Rücksendung der Kurzprofile in Form von Dienstattributdaten) noch nicht gepaart; zwar haben die Geräte nach dem Inquiry ihre Timing- und Sprungsequenzinformation aufeinander abgestimmt, aber noch keinen Verbindungskanal (mit Verwendung eines Verbindungscodes, Authentifizierung, etc.) gelegt. Eine solche Verbindung mit Kanalbelegung durch Verwendung eines Verbindungscodes erfolgt in dem vorliegenden Kontaktvermittlungssystem erst später, wie unten näher erläutert wird. Somit kann in dieser Kurzprofil-Behandlungsphase der für die Verbindungsaufbauprozeduren erforderliche Aufwand vermieden werden.

Bei den Ausführungsformen ist das als Client fungierende Endgerät so eingerichtet, daß es nach Erhalt des oder der Kurzprofile von dem als Server fungierenden Endgerät eine Akzeptanzprüfung durch Vergleich mit dem Client-Endgerät gespeicherter Profilinformation durchführt. Bei manchen der Ausführungsformen sind im Client-Endgerät zum Zweck dieser Akzeptanzprüfung ebenfalls Kurzprofile gespeichert, so daß bei dieser Akzeptanzprüfung ein Vergleich der vom Server empfangenen Kurzprofile mit den eigenen, im Client gespeicherten Kurzprofilen erfolgt. Der Kurzprofilvergleich umfaßt beispielsweise eine Identitätsprüfung, Komplementaritätsprüfung, oder eine aus zwei oder mehreren dieser Prüfungen gebildeten Hybridprüfung der ganzen oder teilweisen Kurzprofile. Bei einer Identitätsprüfung wird - wie der Name schon sagt - auf Identität getestet. Bei einer Komplementaritätsprüfung wird getestet, ob sich zwei Kurzprofile passend ergänzen (beispielsweise ob eines der Profile als Suchprofil und das andere als Bieteprofil gekennzeichnet sind). Bei einer Ähnlichkeitsprüfung wird keine vollständige Identität (und/oder Komplementarität), sondern nur ein gewisses Mindestmaß an Übereinstimmung (bzw. Komplementarität) verlangt. Hierbei braucht nicht der gleiche Testtyp auf das gesamte Kurzprofil angewendet werden; vielmehr ist es möglich, für einen bestimmten Teil der Kurzprofile Komplementarität, einen weiteren Identität und ggf. einen noch weiteren nur Ähnlichkeit zu verlangen. Möglich ist auch eine "Gruppenprüfung", bei der überhaupt nur jeweils ein Teil der Profile (z.B. deren vordere Zeichen) auf Identität, Komplementarität bzw. Ähnlichkeit geprüft wird, ein anderer Teil (z.B. deren hintere Zeichen) jedoch bei der Prüfung unberücksichtigt bleibt.

Bei den Ausführungsformen enthalten die Kurzprofile Angaben, welche - zusammen mit der beim Inquiry oder bei der Dienstentdeckungskommunikation dem Client übermittelten Gerätekennung des Servers-Endgeräts - eine eindeutige Identifikation des von dem Kurzprofil repräsentierten Kontaktprofils erlauben ("repräsentiert" heißt übrigens nicht etwa, daß das Kurzprofil die gleiche Informationsmenge wie das Kontaktprofil enthält; vielmehr wird es meist, wie der Name schon sagt, wesentlich weniger Information als das Kontaktprofil beinhalten). Bei diesen Angaben handelt es sich beispielsweise um eine Profilschemakennung (d.h. eine Kennung des dem Kontaktprofils zugrundeliegenden Kontaktprofilschemas), eine Profilnummer (falls ein Server mehrere Kontaktprofile des gleichen Profiltyps bereithält) sowie einen Aktualisierungszähler (der jedesmal wenn das vom Kurzprofil repräsentierte Kontaktprofil beim Server geändert wird, inkrementiert wird). Im Client sind bei den betreffenden Ausführungsformen sämtliche, bereits früher von anderen Endgeräten erhaltene Kurzprofile (samt der Gerätekennung des Herkunftsservers gespeichert). Im Rahmen der Akzeptanzprüfung wird nun durch Vergleich dieser gespeicherten Identifizierungsdaten und der mit dem aktuellen Kurzprofil erhaltenen Identifizierungsdaten geprüft, ob bereits früher ein Kurzprofil erhalten wurde, welches das gleiche Kontaktprofil wie das aktuell erhaltene Kurzprofil repräsentiert (diese Prüfung kann den Aktualisierungszähler einschließen - sofern nämlich eine Aktualisierung in dem repräsentierten Kontaktprofil stattgefunden hat, wird es als noch nicht bekanntes Profil angesehen). Erkennt der Client bei dieser Prüfung, daß ein erhaltenes Kurzprofil ein ihm bereits bekanntes (und damit bereits früher hinsichtlich Kontaktvermittlung bearbeitetes) Kontaktprofil repräsentiert, scheidet er dieses bereits bekannte Kurzprofil aus, d.h. veranlaßt für es keine weitergehende Kommunikation, d.h. beispielsweise keine Anforderung des betreffenden vollständigen Kontaktprofils, wie es im folgenden näher beschrieben wird.

Bei manchen Ausführungsformen ist dieser Überprüfungsmechanismus dahingehend weitergebildet, daß, falls ein eigenes Profil im Client geändert wird, von dieser möglicherweise tangierte bekannte Profile auf "nicht bekannt" gesetzt werden. Dies hat die Auswirkung, daß der Client nun ein - erst durch die eigene Profiländerung einschlägig gewordenes - Profil, dessen Kurzprofil er bereits früher erhalten hatte, vom Server abrufen wird (ohne diese Maßnahme würde er das Kurzprofil als bekannt ansehen, und das von diesem repräsentierte Profil daher nicht abrufen).

Nach negativem Ausgang der Akzeptanzprüfung erfolgt für das betreffende Kontaktprofil keine weitergehende Kontaktaufnahme-Kommunikation, wohl aber bei positivem Ausgang. Bei einigen der Ausführungsformen wird zum Zweck dieser weitergehenden Kommunikation nun eine Paarung von Client-Endgerät und Server-Endgerät hergestellt. Wie oben ausgeführt wurde, bedeutet das Herstellen einer Paarung z.B. bei Bluetooth die Belegung eines, durch einen Verbindungscode identifizierten Verbindungskanals. Die folgende Kommunikation auf diesem Kanal kann beispielsweise authentifiziert und/oder verschlüsselt erfolgen. Die nun unter gepaarten Verbindung erfolgende weitergehende Kommunikation zwischen dem Client- und Server-Endgerät beinhaltet bei manchen Ausführungsformen die Übersendung desjenigen vollständigen Kontaktprofils, dessen zugehöriges Kurzprofil die Akzeptanzprüfung positiv bestanden hat (falls mehrere Kurzprofile diese Prüfung positiv bestanden haben, umfaßt sie entsprechend die Übersendung dieser mehreren Kontaktprofile). Bei einigen dieser Ausführungsformen erfolgt dies Kontaktprofilübersendung, indem das als Client fungierende Endgerät dem als Server fungierende Endgerät über den gepaarte Verbindungskanal eine Anfrage zur Übersendung des betreffenden Kontaktprofils (bzw. der betreffenden Kontaktprofile) übersendet, und das Server-Endgerät auf diese Anfrage durch Übersendung des oder der betreffenden Kontaktprofile über den gepaarten Verbindungskanal antwortet.

Bei einigen der Ausführungsformen ist die Kontaktaufnahmeprozedur mit der Übersendung des Kontaktprofils bereits im wesentlichen abgeschlossen - der Benutzer kann nun z.B. die im Kontaktprofil enthaltenen Daten betrachten und ev. manuell eine im Kontaktprofil angegebene Telefonnummer zwecks Sprachverbindung oder Übersendung einer Nachricht über das Zellularfunknetz anwählen.

Bei anderen Ausführungsformen unterzieht das als Client fungierende Endgerät das erhaltene Kontaktprofil jedoch einer weitergehenden Prüfung, der sog. "Kontaktaufnahmeprüfung". Bei dieser wird das erhaltene Kontaktprofil, oder Teile von diesem, auf Identität, Komplementarität, Ähnlichkeit mit einem eigenen Profil, oder Erfüllen von im eigenen Profil vorgegebenen Bedingungen (z.B. Nichtüberschreitung von Grenzwerten) geprüft.

Bei positiven Ausgang der Kontaktaufnahmeprüfung veranlaßt das als Client fungierende Endgerät dann die eigentliche Kontaktaufnahme. Hierfür sehen verschiedene Ausführungsformen unterschiedliche Wege der Kontaktaufnahme vor (die bei ein und derselben Ausführungsform eines Endgeräts auch wahlweise oder in Kombination gewählt werden können): Sprachkontaktaufnahme mit dem Server-Endgerät über Direktfunkkommunikation, Sprachkontaktaufnahme mit dem Server-Endgerät oder einem anderen Endgerät über Zellularfunkkommunikation, Übersendung einer Nachricht an das Server-Endgerät über Direktfunkkommunikation, Übersendung einer Nachricht an das Server-Endgerät oder ein anderes Endgerät über Zellularfunkkommunikation, und Übersendung einer Nachricht an einen Chiffre-Service über Zellularfunkkommunikation. Bei den Nachrichten kann es sich z.B. um bei Bluetooth übliche, sog. Visitenkarten handeln, oder Nachrichten eines SMS- oder MMS-Dienstes. Sprachkontaktaufnahme und Nachrichtenübersendung über das Zellularfunknetz setzen natürlich voraus, daß die Telefonnummer des Server-Endgeräts bzw. des anderen Endgeräts in dem übersandten Kontaktprofil enthalten war. Alternativ kann der Profilgeber (d.h. der Server) mit Hilfe eines Chiffre-Services zunächst seine Anonymität waren, indem er mit dem Kontaktprofil statt nicht-anonymisierten Daten (wie der Telefonnummer) eine Chiffrenummer überreicht, wobei die Zuordnung von Chiffrenummer und seiner Identität (z.B. seiner Telefonnummer) nur einem vertrauenswürdigen Chiffre-Service bekannt ist. Das Client-Endgerät sendet seine Kontaktaufnahmenachricht unter Angabe der übermittelten Chiffrenummer diesen Chiffre-Service. Dieser wiederum leitet sie auf der Grundlage der ihm bekannten Zuordnung an den Profilgeber (z.B. and das Client-Endgerät) weiter.

Bei einigen Ausführungsformen ist das ein Kontaktprofil repräsentierende Kurzprofil fest durch das dem Kontaktprofil zugrunde liegenden Profilschema definiert, ohne von vom Nutzer in das Kontaktprofil eingegebenen oder vom Endgerät im Kontaktprofil erzeugten Daten abhängig zu sein - das Kurzprofil ist dann sozusagen ein Bezeichner des dem Kontaktprofils zugrunde liegenden Profilschemas. Bei anderen Ausführungsformen ist das ein Kontaktprofil repräsentierende Kurzprofil hingegen teilweise durch das dem Kontaktprofil zugrunde liegenden Profilschema definiert, und teilweise von vom Nutzer in das Kontaktprofil eingegebenen oder vom Endgerät im Kontaktprofil erzeugten Daten abhängig. Bei diesen Ausführungsformen ist das Endgerät dazu ausgebildet, die besagten, vom Nutzer eingegebenen Daten automatisch in das diese repräsentierende Kurzprofil zu codieren.

Bei einigen Ausführungsformen liegen die Kontaktprofile in einer Syntax einer Auszeichnungssprache (z.B. XML) vor; das zugehörige vordefinierte Profilschema ist z.B. in Form einer (XML-)Dokumenttyp- und (XML-)Schemadefinition gegeben.

Bei einigen Ausführungsformen sind die Endgeräte dazu ausgebildet, daß Profilschemas, welche Kontaktprofile vordefinieren, über ein zelluläres Mobilfunknetz herunterladbar sind, und daß nach Herunterladung eines Profilschemas vom Benutzer zur Erstellung eines benutzerindividuellen Kontaktprofils in dieses individuelle Daten eintragbar sind.

Bei manchen Ausführungsformen wird die Häufigkeit der vorgenommenen Kontaktvermittlungen (und damit die Wahrscheinlichkeit von "Treffern") dadurch erhöht, daß die Endgeräte von andern Nutzern stammende Profile, sog. Fremdprofile, aufnehmen und an weitere Nutzer weiter propagieren. Bei den im Gerät gespeicherten Fremdprofilen handelt es sich z.B. um Profile, die bei vorausgegangenen Kontaktvermittlungen von anderen Endgeräten erhalten wurden. Um die Verbreitung von Fremdprofilen aber noch weiter zu beschleunigen, können auch (z.B. stationäre) Fremdprofil-Verbreitungsgeräte vorgesehen sein.

Das vorliegende Kontaktvermittlungssystem wird hier zum leichteren technischen Verständnis als Gesamtsystem mit mehreren Endgeräten beschrieben. Natürlich verkörpert sich die Erfindung bereits in einem einzelnen Endgerät (auch wenn dieses allein nicht kommunizieren kann, sondern es hierzu wenigstens zweier derartiger Geräte bedarf). Da solche Endgeräte voraussichtlich hauptsächlich als Einzelgeräte vertrieben werden, ist es gerechtfertigt, Patentansprüche auch auf ein Einzelgerät zu richten. Natürlich bezieht sich die gesamte vorhergehende und nachfolgende Beschreibung des Gesamtsystems auch auf das Einzelgerät.

Die Eignung der Endgeräte zu der beschriebenen Teilnahme an dem Kontaktvermittlungssystem (also die beschriebene Kontaktvermittlungsfunktionalität) erhalten diese bei den meisten Ausführungsformen durch eine Software-Applikation, also ein Computerprogramm, das vom Prozessor des jeweiligen Endgeräts prozessiert wird. Das Programm kann beispielsweise in JAVA (bei JAVA-prozessierenden Endgeräten) oder in der Maschinensprache des Endgerätprozessors programmiert sein). Bei einigen Ausführungsformen sind die Endgeräte von vornherein (also bereits ab Herstellung) mit diesem Programm ausgerüstet, bei anderen Ausführungsformen ist das Programm in die Endgeräte einspielbar. Ein solches Programm wird daher ein Gegenstand des Handelsverkehrs sein, z.B. gespeichert auf einem Datenträger oder vorliegend in Form einer Signalfolge, welche zur Übersendung an ein Mobilkommunikations-Endgerät geeignet ist. Zum Beispiel kann sich ein Endgerät das Programm über das Internet via Zellularfunk mit Hilfe der ev. vorhandenen WAP-Fähigkeit des Endgeräts herunterladen. Es ist daher auch gerechtfertigt, Patentansprüche auf das Programm zu richten.

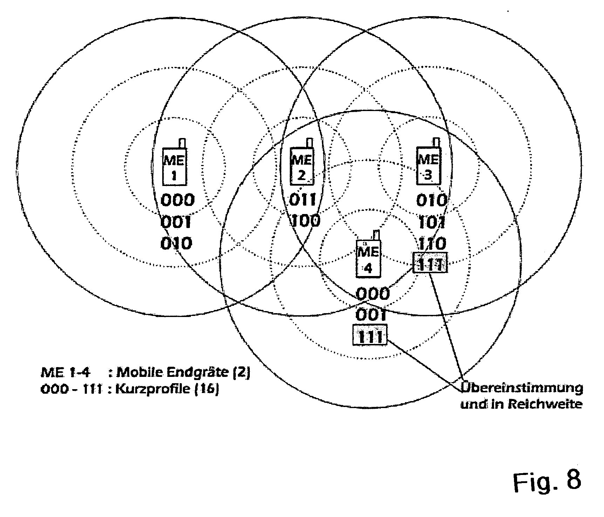

Nun zurückkehrend zu Fig. 1, zeigt diese eine Veranschaulichung von Kommunikationspartnern und -wegen in einem Kontaktvermittlungssystem 1. In Fig. 1 sind beispielhaft nur zwei Kommunikationspartner in Form jeweils eines Endgeräts 2 dargestellt, wobei sich fallweise natürlich auch mehr als zwei solcher Endgeräte 2 in Reichweite befinden können, wie das etwa in Fig. 8 veranschaulicht ist. Dort befinden sich die mobilen Endgeräte ME 2, ME 3 und ME 4 untereinander in Reichweite, wobei die beiden mobilen Engeräte ME 3 und ME 4 auch ein übereinstimmendes Kurzprofil 16 aufweisen. Die Reichweite ist in Fig. 8 durch konzentrische Ringe um die mobilen Endgeräte illustriert.

Eines der Endgeräte 2 übernimmt bei dem in Fig. 1 dargestellten Beispiel die Rolle eines Clients 3, das andere diejenige eines Servers 4. Bei den Endgeräten 2 handelt es sich um mobile Endgeräte für zellulären Mobilfunk (z.B. Mobiltelefone), die in üblicher Weise über Funkkontakt zu einer Basisstation 5 eines Zellularfunknetzes (z.B. GSM oder UMTS) mit anderen Teilnehmern - des selben oder eines anderen Funknetzes oder eines Festnetzes im Mobilkommunikation treten können. Die Endgeräte 2 sind außerdem mit einem Sende-Empfangs-Teil 6 ausgestattet, der kurzreichweitige Ad-hoc-Kommunikation mit anderen entsprechenden Geräten erlaubt, hier z.B. einem Bluetooth-Sende-Empfangsteil. Mit Hilfe dieser Bluetooth-Sende-Empfangsteile 6 könne die beiden Endgeräte - wenn sie in Bluetooth-Reichweite gelangen - auf direktem Wege, also unter Nichtverwendung des i.a. ebenfalls möglichen Kommunikationswegs über das Zellularfunknetz mit seiner Basisstation 5, in Ad-hoc-Kommunikation treten. Die Endgeräte 2 sind in besonderer Weise programmiert, und zwar so, daß deren vorgegebene Fähigkeit zur direkten Ad-hoc-Kommunikation im Rahmen des Kontaktvermittlungssystems 1 dazu verwendet wird, mit anderen Teilnehmern des Kontaktvermittlungssystems, die i.a. dem Nutzer eines Endgeräts 2 unbekannt sind und zufällig in dessen Reichweite gelangt sind, Kontakte herzustellen, sofern bestimmte Kontaktkriterien erfüllt sind. Im Rahmen dieser Kontaktvermittlung kommt es - je nach Erfiilltsein der genannten Bedingungen - zu mehren abgestuften Kommunikationsvorgängen, die in Fig. 1 zur Veranschaulichung angegeben sind und im Zusammenhang mit den folgenden Fig. noch näher erläutert werden. So sendet das Client-Endgerät 3 über den direkten Funkkanal Anwesenheitsanfragen (Inquiries) 13, die u.a. vom Server-Endgerät 4 empfangen und über den direkten Funkkanal mit einer entsprechenden Inquiry-Antwort 14 beantwortet werden. Weiterhin sendet das Client-Endgerät 3 über den direkten Funkkontakt eine Dienstsuchanfrage 15 nach beim Server-Endgerät 4 gespeicherten Kurzprofilen, welche dieses mit einer entsprechenden Dienstsuchantwort, d.h. der Übersendung seiner Kurzprofile 16 beantwortet. Nach Durchfiihrung einer Akzeptanzprüfung sendet das Client-Endgerät 3 eine Profilanfrage 17 an das Server-Endgerät 4, welches dieses durch Rücksendung des angefragten Kontaktprofils 18 (z.B. im XML-Format) über den direkten Funkkontakt beantwortet. Ergibt sich nach Überprüfung des übersendeten Kontaktprofils 18, daß das Client-Endgerät 3 Kontakt mit dem Server-Endgerät 4 aufnehmen möchte, so versucht es, in einer von verschiedenen möglichen Formen den eigentlichen Kontakt aufzunehmen. Dieser Kontaktaufnahmeversuch kann wiederum über den direkten Bluetooth-Funkkontakt erfolgen, beispielsweise durch Übersendung einer personalisierten Kurznachricht ("Bluetooth-Visitenkarte"), oder durch Aufnahme einer Sprechverbindung über den Bluetooth-Kanal - dies ist in Fig. 1 mit "Kontaktaufnahmeanfrage 19" dargestellt. Dem Server-Endgerät 4 steht es dann frei, z.B. wiederum unter Verwendung des Bluetooth-Funkweges die Kontaktaufnahmeanfrage 19 zu beantworten und dadurch letztlich eine zweiseitigen Kontakt herzustellen, beispielsweise durch Rücksendung einer eigenen Visitenkarte, oder annehmen des Sprachverbindungswunsches - dies ist in Fig. 1 "Kontaktaufnahmeantwort 20" veranschaulicht. Die eigentliche Kontaktaufnahme kann aber z.B. auch über das Zellularmobilfunknetz erfolgen, beispielsweise wenn sich die beiden Endgeräte 2 nun nicht mehr in der Reichweite für direkten Funkkontakt befinden. Beispielsweise kann das Client-Endgerät 3 - wenn in dem erhaltenen Profil die Mobilfunknummer des Server-Endgeräts 4 angegeben war, mit diesem eine Zellularfunk-Sprachverbindung 7 herzustellen versuchen, oder diesem eine Nachricht 8 über das Zellularfunknetz senden (in Fig. 1 ist dies mit "SMS direkt" gekennzeichnet). Bei anderen Ausführungsformen kann in dem übersendeten Kontaktprofil 18 eine Chiffrenummer eines Chiffreservices 9 enthalten sein. Das Client-Endgerät 3 sendet dann beispielsweise eine Chiffrenachricht 10 (bezeichnet mit "SMS an Chiffreservice") über das Zellularmobilfunknetz an den Chiffreservice 9. Dieser ordnet die in der Chiffrenachricht 10 enthaltene Chiffre dem Server-Endgerät 4 zu und sendet diesem, wiederum über das Zellularmobilfunknetz die (nun dechiffrierte) Chiffrenachricht 10' zu.

Schließlich dient das Zellularmobilfunknetz den Endgeräten 2 auch als Weg zum Herunterladen von Profilschemas 11, die beispielsweise von einem Profilschemaservice 12 geliefert werden. Damit die von - sich zunächst nicht bekannten - Endgeräten 2 übersendeten Profile vom jeweils anderen Gerät "verstanden" werden, haben diese Profile gewissen Profilvorlagen zu entsprechen, eben den Profilschemas 11. Grundsätzlich können derartige Profilschemas bei Auslieferung einer Endgeräts 2 fest in diesem vorgegeben sein. Bei einer Beschränkung auf solche vorgegebenen Profilschemas wäre ein solcher Kontaktvermittlungsdienst aber relativ starr, da er zumindest älteren Endgeräten 2 nicht die Möglichkeit gäbe, Profile zu verwenden, die speziell auf erst nach der Herstellung des Endgeräts entstandene Kontaktvermittlungsinhalte angepaßt sind. Um diesbezüglich mehr Flexibilität zu erhalten, sind die Endgeräte 2 so programmiert, daß sie zu jedem späteren Zeitpunkt neue Profilschemas 11 über das Zellularmobilfunknetz von dem Profilschemaservice 12 herunterladen können, und daß diese heruntergeladenen Profilschemas 11 automatisch funktionell so in das betreffende Endgerät 2 eingebunden werden, daß der Benutzer durch Eintragung von Daten aus dem Profilschema 11 ein Kontaktprofil 18 (also eine Instanz des Profilschemas 11) erstellen kann, und diese in der beschriebenen Weise in dem Kontaktvermittlungssystem 1 verwenden kann.

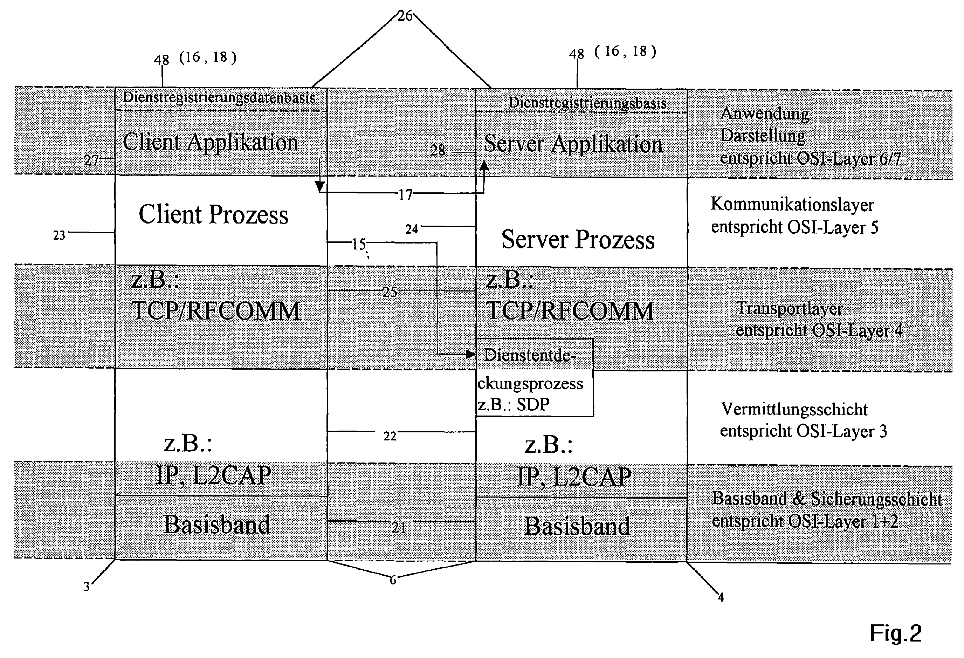

Fig. 2 zeigt ein schematisches Schichtungsdiagramm des Clients 3 und Servers 4 zur schichtenbezogenen Veranschaulichung des Kontaktvermittlungs-Kommunikationsvorgangs über den direkten Funkkontakt. Die tatsächliche Kommunikation findet auf der untersten Schicht, nämlich über einen Funkweg zwischen den Sende-Empfangs-Teilen 6 von Client 3 und Server 4 statt. Gemäß der Bluetooth-Technologie sitzt hierauf das sog. Basisband (base band) 21, welches für das Frequenzsprungverfahren, die Verwaltung von Datenkanälen, die Adressierung von Geräten etc. sorgt. Darüber sitzt die sog. L²CAP-Schicht 22 (Logical Link Control and Adoption Layer Protocol), welche zum Teil der sog. Sicherungsschicht und der Vermittlungsschicht des ISO-OSI-Referenzmodells zugeordnet werden kann (im Falle von Bluetooth lassen sich die Schichten, in ihren Aufgaben, nicht eindeutig im OSI-Modell abbilden). Darauf folgt der Transportlayer, im Falle von Bluetooth die RFCOMM-Schnittstelle 25. Zwischen diesen beiden Schichten sitzt ein Diensterkennungsprozess 29 (aufgrund seiner Struktur kann er keinem speziellen OSI-Layer vollständig zugeordnet werden), welcher im Falle von Bluetooth durch das SDP realisiert wird. Bei WLAN lässt sich der Diensterkennungsprozess z.B. jederzeit durch einen eigenständigen Prozess abbilden, der auf einen eigenen Port spezifiziert wurde. Oberhalb des eigentlichen Client- 23 bzw. Server-Prozesses 24 und der Schnittstelle 25 sitzt eine, speziell der Kontaktvermittlung dienende Applikation 26, welche eine Client-Applikation 27 und eine Server-Applikation 28 umfaßt. Zur Client-Applikation 27 bzw. Server-Applikation 28 gehört eine Dienstregistrierungsdatenbasis 48, in welcher die Dienstrecords mit den Dienstattributen (Kurzprofilen) gespeichert sind. Die Kontaktvermittlungs-Applikation 26 veranlaßt die Speicherung der Kurzprofile 16 entsprechend den zu repräsentierenden Kontaktprofilen 18 in dem jeweiligen Diensterkennungsprozess 29, damit diese Kurzprofile 16, wie oben geschildert, im Rahmen von Dienstsuchanfragen als Dienstattributdaten vom Server 4 zum Client 3 übertragen werden können. Die oben geschilderten Inquiry- und Dienstanfrageprozeduren sind in der Bluetooth-Technologie bereits in den Ebenen 22 und 29 implementiert, so daß die Kontaktvermittlungs-Applikation 26 diese Prozeduren gewissermaßen nur anzustoßen braucht. Die eigentliche Arbeit der Applikation 26 beginnt erst, wenn auf die Dienstsuchanfrage 15 übertragene Kurzprofile 16 vom Client-Prozess 23 zur Kontaktvermittlungs-Clientapplikation 27 hochgereicht werden; dann beginnt letztere nämlich mit der oben erläuterten Akzeptanzprüfung. An diese schließt sich ggf. die Übersendung einer Kontaktprofilanfrage 17 an die Kontaktvermittlungsserver-Applikation 28 des Server-Endgeräts 4 und die Rücksendung des angeforderten Kontaktprofils 18 an, sowie die ggf. anschließende eigentliche Kontaktaufnahme.

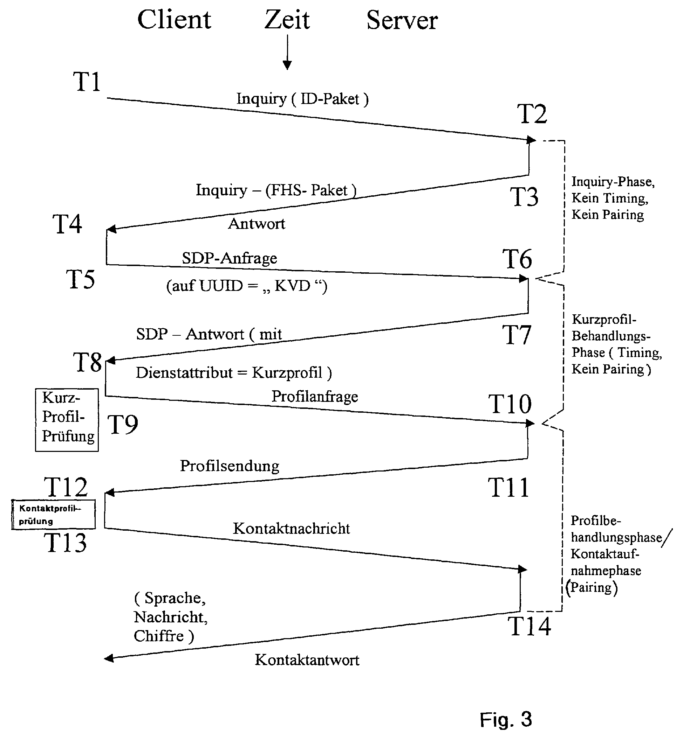

Fig. 3 veranschaulicht den zeitlichen Ablauf der Kommunikation zwischen Clientgerät 3 und Servergerät 4 sowie die in den Geräten 3, 4 ablaufenden Prozessierungsvorgänge anhand eines Timing-Diagramms. Zum Zeitpunkt T1 sendet das Clientgerät 3 ein Inquiry, z.B. in Form eines ID-Pakets aus, welches das Servergerät 4 zum Zeitpunkt T2 empfängt. Das Servergerät 4 beantwortet dies zum Zeitpunkt T3 mit der Rücksendung einer Inquiry-Antwort, z.B. in Form eines FHS-Pakets, welches bei T4 vom Clientgerät 3 empfangen wird. T1 bis T4 bilden somit die Inquiry-Phase. Während dieser Inquiry-Phase haben Clientgerät 3 und Servergerät 4 keine Kenntnis über das Timing des jeweils anderen Geräts, und es ist erst recht noch kein Pairing durchgeführt worden (d.h. es gibt noch keine Verbindung mit einem Verbindungscode).

Durch die Inquiry-Antwort erfährt das Clientgerät 3 von der Existenz des Servergeräts 4; es erhält außerdem Timing-Information vom Servergerät 4, die in der folgenden Kommunikation zur Synchronisation verwendet. Zum Zeitpunkt T5 sendet es an das Servergerät 4 eine SDP-Anfrage auf die Dienstkennung "KVD", welche das Servergerät bei T6 empfängt. Dieses ruft daraufhin die bei ihm für die Kennung "KVD" gespeicherten Dienstattributdaten, also seine Kurzprofile 16 ab und sendet diese bei T7 an das Clientgerät 3, welches sie bei T8 empfängt. Im Zeitraum von T8 bis nahezu T9 führt das Clientgerät 3 die Akzeptanzprüfung der erhaltenen Kurzprofile durch. Die Phase von T5 bis nahezu T9 ist die Kurzprofilbehandlungsphase. Der darin stattfindenden Kommunikation liegt zwar die in der Inquiry-Phase gewonnene Timing-Information zugrunde, jedoch ist auch in dieser Phase noch kein Pairing durchgeführt worden (d.h. bei der SDP-Kommunikation gab es ebenfalls noch keine Verbindung mit einem Verbindungscode).

Bei positivem Ausgang der Akzeptanzprüfung baut das Clientgerät 3 nun ein Pairing, d.h. eine Verbindung mit Verbindungsparameter/Kanalbelegung zum Servergerät 4 auf und sendet bei T9 eine Profilanfrage an dieses, welche dieses bei T10 erhält. Bei T11 sendet das Servergerät 4 das oder die angefragten Kontaktprofile zurück, welche das Clientgerät 3 bei T12 erhält. Das Clientgerät 3 führt dann, bis nahezu T13, die Kontaktprofilprüfung durch und sendet bei positivem Ausgang bei manchen Ausführungsformen zum Zeitpunkt T13 z.B. eine Kontaktnachricht an das Servergerät 3, welche dieses bei T14 empfängt. Hierauf kann das Servergerät 4 ggf. wieder antworten. Der Zeitraum von T9 bis nahezu T13 bildet die Kontaktprofilbehandlungsphase, und der anschließende Zeitraum die eigentliche Kontaktaufnahmephase. Die Kommunikation in der Kontaktprofilbehandlungsphase sowie diejenige in der Kontaktaufnahmephase (soweit letztere über Bluetooth erfolgt) wird im Rahmen einer Pairing-Verbindung (mit Verbindungsparameter/Kanalbelegung) zwischen Clientgerät 3 und Servergerät 4 durchgeführt.

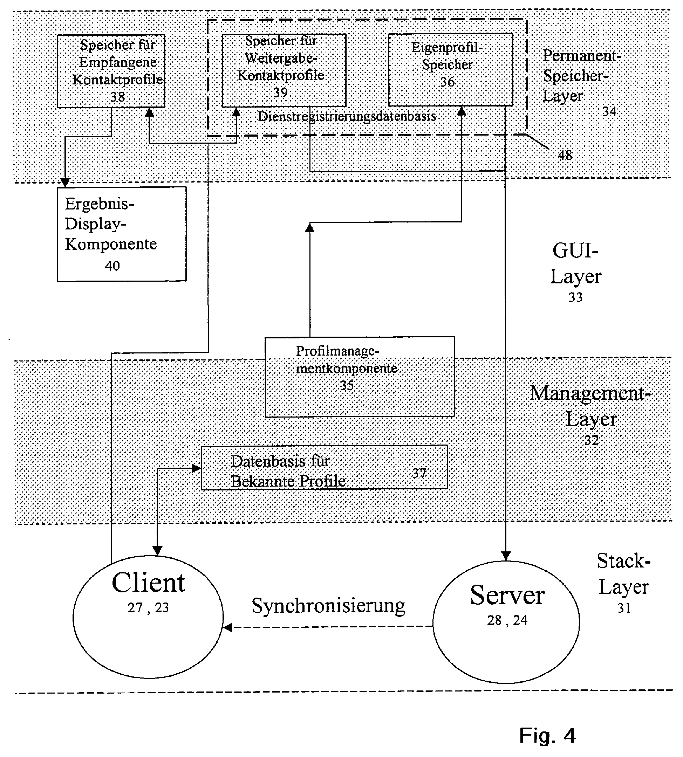

Fig. 4 ist ein abstraktes Architekturdiagramm der Kontaktvermittlungs-Applikation 26 von Fig. 2. Während in Fig. 2 auf einem Endgerät jedoch nur der Clientteil und auf dem anderen Endgerät nur der Serverteil der Applikation 26 dargestellt war, veranschaulicht Fig. 4, daß sowohl Client-Applikation/Prozess 27, 23 als auch Server-Applikation/Prozess 28, 24 auf ein und demselben Endgerät implementiert sind. Und zwar handelt es sich dabei um zwei nebenläufige Prozesse; diese sind im wesentlichen voneinander unabhängig, können aber z.B. zu Synchronisierungszwecken Einfluß aufeinander nehmen. In dem Architekturdiagramm von Fig. 4 ist die Applikation 26 geschichtet dargestellt, und zwar mit einem Stack-Layer 31, einem Managementlayer 32, einem GUI-Layer 33 (GUI=Graphical User Interface, d.h. graphische Benutzerschnittstelle) sowie einem Permanentspeicher-Layer 34. Im Stack-Layer 31 ist der Client 27, 23 und der Server 28, 24 nebenläufig. Der Managementlayer 32 dient dem Management, d.h. der Überwachung, Einrichtung und Manipulation von Kontaktprofilen. Der GUI-Layer 33 ermöglicht dem Nutzer das Profilmanagement und die Darstellung von Prüfungsresultaten etc. Der Permanentspeicher-Layer 34 speichert schließlich dauerhaft verschiedene Kontaktprofile.

Im Bereich des Managementlayer 32 findet sich, übergreifend in den GUI-Layer 33, eine Profilmanagementkomponente 35. Mit dieser kann der Benutzer im wesentlichen Kontaktprofile 18 einrichten, verändern und betrachten, wobei diese Kontaktprofile in einem Eigenprofil-Speicher 36 im Permanentspeicher-Layer 34 gespeichert werden. Wie oben erläutert wurde, veranlaßt die Client-Applikation 27 keine Kontaktaufnahme in solchen Fällen, in denen er anhand eines empfangenen Kurzprofils 16 feststellt, daß er das (von dem Kurzprofil 16 repräsentierte) Kontaktprofil 18 bereits kennt. Hierzu ist eine Datenbasis 37 für bekannte Profile vorgesehen, in der die vom Client erhaltenen Kurzprofile gespeichert werden. Wie oben bereits ausgeführt wurde, sollen nach Einrichtung oder Änderung eines eigenen Kontaktprofils 18 (im Eigenprofilspeicher 36) die von dieser Änderung möglicherweise betroffenen Profile 18 anderer Geräte nicht mehr verworfen werden. Entsprechend beeinflußt die Profilmanagementkomponente 35 bei einer solchen Profileinrichtung oder -änderung die Datenbasis 37 bekannter Profile, indem sie diejenigen Kurzprofile 16, die möglicherweise betroffene Profile von anderen Geräten betreffen, aus der Datenbasis 37 entfernt.

Der Permanentspeicherlayer 34 weist neben dem Eigenprofilspeicher 36 auch noch einen Speicher 38 für empfangene Kontaktprofile 18 sowie einen Speicher 39 für Weitergabe-Kontaktprofile 18 auf. Vom Client 27 empfangene Kontaktprofile 18 von anderen Endgeräten werden im Speicher 38 gespeichert; in einer Ergebnisdisplaykomponente 40 sind diese empfangenen Profile 18 für den Benutzer betrachtbar. Komplementär zur Behandlung der empfangenen Profile 18 holt sich die Server-Applikation 28 bei Erhalt einer Anfrage von einem anderen Endgerät aus dem Eigenprofilspeicher 36 die zu übersendenden eigenen Profile 18 ab. Gewissermaßen eine Brücke zwischen Client 27 und Server 28 bildet der Speicherbereich 39 für Weitergabeprofile 18. Wie unten näher erläutert wird, handelt es sich bei diesen Weitergabeprofilen 18 um Fremdprofile von anderen Geräten (oder auch Fremdprofilverbreitungsservern), welche wiederum an weitere anfragende Geräte weitergegeben werden können. Da das Hereingelangen solcher Profile über den Client 27, deren Herausgabe aber über den Server 28 läuft, können Weitergabeprofile einerseits vom Client 27 in den Speicherbereich 29 eingeschrieben und andererseits vom Server 28 aus diesem Speicherbereich ausgelesen werden.

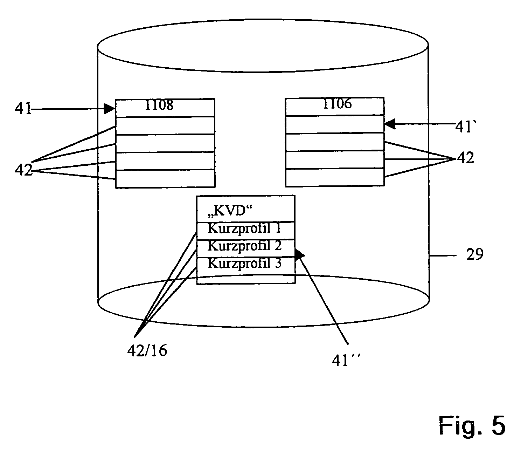

Fig. 5 veranschaulicht die Inhalte des Diensterkennungsprozesses 29 von Fig. 2. Dieser Prozess stellt eine Datenbasis bereit, in der mehrere Dienstrecords gespeichert sind, die jeweils eine Instanz einer Dienstklasse darstellen. Beispielsweise gibt es dort einen Dienstrecord 41 mit einem UUID "1108" für einen Dienst "Headset" sowie einen weiteren Dienstrecord 41' mit dem UUID 1106 für einen Filetransfer-Dienst. Schließlich ist der hier interessierende Dienstrecord mit 41" mit dem UUID "KVD" dargestellt. Jeder der Dienstrecords 41, 41', 41" hat zugeordnete Dienstattributdaten in Form einzelner Dienstattribute 42. Bei dem Kontaktvermittlungs-Dienstrecord 41" sind die Dienstattribute die Kurzprofile 16, die bei einer Dienstanfrage an das Kontaktvermittlungssystem (d.h. an den UUID "KVD") an den anfragenden Client-Prozess 23 übersendet werden. Die angegebenen UUID-Werte sind nur beispielhaft für den Bluetoothbereich. Im Falle von WLAN finden sie als Portnummern ihre Entsprechung.

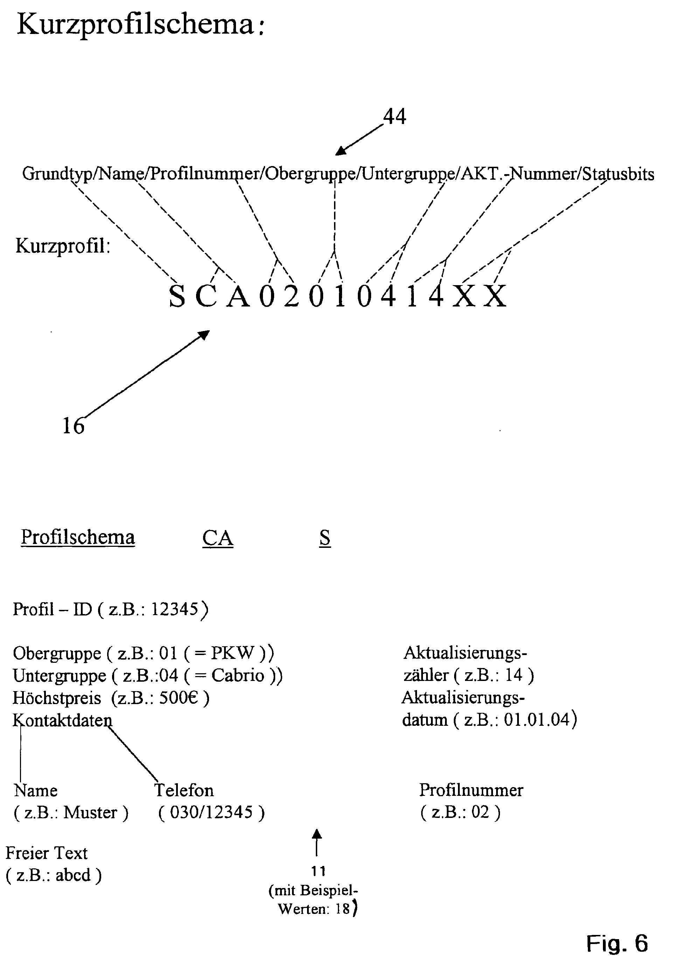

Fig. 6 veranschaulicht in Profilschema 11 (mit beispielhaft angegebenen Werten, somit ein Profil 18) und ein hierzu gehöriges Kurzprofil 16 samt Kurzprofilschema 44. Bei dem gezeigten Beispiel handelt es sich um ein vordefiniertes Profilschema für die Suche (repräsentiert durch "S") eines Kraftfahrzeugs (repräsentiert durch "CA"). Das Profilschema 11 enthält eine Reihe von Attributen, welche bestimmte Werte mit vordefinierter Bedeutung annehmen dürfen. Beispielsweise gibt es Attribute wie "Obergruppe", "Untergruppe", "Höchstkreis", "Kontaktdaten", wie "Name", "Telefon" etc. Für einige dieser Attribute kann der Benutzer bei der Erstellung eines Kontaktprofils, also einer Instanz des Profilschemas 11, im Benutzerinterface zwischen mehreren Möglichkeiten auswählen; beispielsweise werden ihm für die Obergruppe "PKW", "LKW", "Motorrad" zur Auswahl angeboten. Bei Auswahl von "PKW" trägt die Profil-Managementkomponente 35 beispielsweise den entsprechenden Code (hier "01") in das Kontaktprofil 18 ein. Für andere Attribute gibt es Formatbeschränkungen, beispielsweise dürfen unter Telefonnummer nur Zahlen eingetragen werden. Darüber hinaus gibt es ein oder mehrere Attribute (z.B. "freier Text"), in welche der Benutzer ohne derartige Beschränkungen Daten eintragen kann. Schließlich gibt es Attribute, deren Werte vom System automatisch erstellt werden, z.B. eine Profilkennung ("Profil-ID"), ein "Aktualisierungszähler", ein "Aktualisierungsdatum" und eine "Profilnummer", deren Werte von der Profilmanagementkomponente 35 automatisch erstellt werden. Die Profil-ID wird beispielsweise im Rahmen der Dienstentdeckung vom Client (Applikation über den Prozess) 27, 23 verwendet wird, um ein bestimmtes Kurzprofil vom Diensterkennungsprozess (im Falle von Bluetooth SDP) 29 abzuholen (d.h., die Profilkennung kann auch als Dienstattributkennung im Rahmen der Dienstanfrage verwendet werden). Um verschiedene Aktualisierungen unterscheiden zu können, ist ein Aktualisierungszähler und ggf. das Aktualisierungsdatum vorgesehen; diese Aktualisierungs-Attribute werden vom System mit Werten gefüllt. Der Wert der Profilnummer wird ebenfalls vom System vergeben; die Profilnummer dient der Unterscheidung mehrerer Kontaktprofile des gleichen Typs, etwa wenn jemand mehrere Profile mit gleichen Profilnamen benutzt, beispielsweise gewerbliche Verkäufer, die mehrere Automobile kaufen oder verkaufen wollen. Ferner existieren Statusbits, die den Zustand des Servers in vielfältiger Hinsicht repräsentieren. Das Profilschema 11 liegt beispielsweise in Form einer XML-Dokumentdefinition oder eines XML-Schemas vor.

Jede Instanz eines Profilschemas 11 (d.h. jedes "mit Werten ausgefüllte" Kontaktprofil 18) ist durch ein Kurzprofil 16 repräsentiert. In Fig. 6 ist ein Beispiel eines Kurzprofilschemas 44 sowie dasjenige Kurzprofil 16 gezeigt, welches das in Fig. 6 beispielhaft dargestellte Kontaktprofil 18 repräsentiert. "Repräsentiert" bedeutet hier nicht etwa, daß das Kurzprofil 16 die gesamte Information des vollständigen Kontaktprofils 18 enthält; vielmehr genügt ein Teil dieser Information, welche im Rahmen des Akzeptanztests eine erste Filterung erlaubt. Das beispielhafte Kurzprofilschema 44 enthält die Attribute "Grundtyp", (eindeutiger) "Name", "Profilnummer", "Obergruppe" und "Untergruppe" und "Aktualisierungsnummer". Zum Teil sind die Werte dieser Attribute durch das Profilschema 11 vorgegeben, welches dem repräsentierten Kontaktprofil 18 zugrunde liegt, zum anderen sind sie durch die Werte vorgegeben, die der Benutzer oder das System in das repräsentierte Kontaktprofil 18 eingetragen hat. Zur ersten Klasse gehören beispielsweise der Grundtyp und der eindeutige Profilname. Wie in Beispiel von Fig. 6 gezeigt, ist der Grundtyp beispielsweise "S" (für "Suche"), und der eindeutige Name "CA" (für "Car", d.h. Automobil). Weitere Grundtypen sind beispielsweise "B" für ein Bieteprofil, und "H" (Hash) für ein Profil gleichseitiger "Qualität", welches für einen positiven Akzeptanztest nicht komplementär gepaart werden (wie Biete- und Sucheprofile), sondern eine identische Paarung verlangen. Zur zweiten Klasse gehören die restlichen Attribute; sie ergeben sich aus den Werten, die der Benutzer oder das System in das repräsentierte Kontaktprofil 18 eingegeben hat. Das sich daraus ergebende Kurzprofil 16 lautet für das in Fig. 6 gegebene Beispiel: "SCA0201014". Die Ableitung dieser Attributwerte für das Kurzprofil 16 aus dem Kontaktprofil 18 führt die Profilmanagementkomponente 35 automatisch durch.

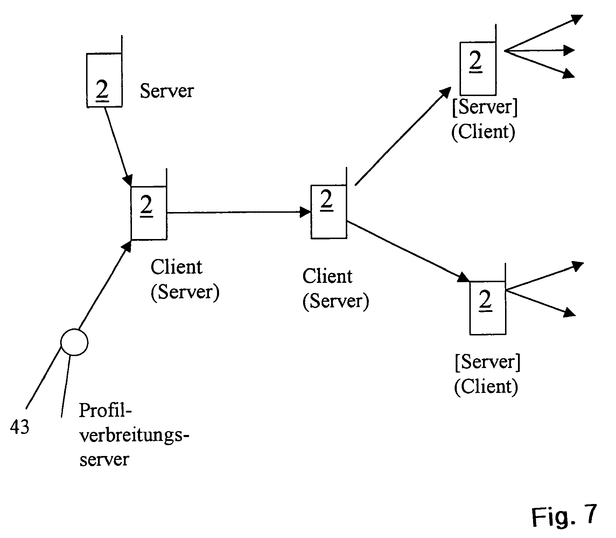

Fig. 7 veranschaulicht die Fortpflanzung von "Fremdprofilen" 18. Ein Endgerät 2 erhält nämlich laufend, wenn es als Client 3 fungiert, Kontaktprofile 18 von anderen Endgeräten, die als Server 4 fungieren. Die Hauptfunktion dieser Übermittlung von Kontaktprofilen 18 liegt, wie oben erläutert wurde, darin, daß das Client-Endgerät 3 anhand der empfangenen Kontaktprofile 18 z.B. prüfen kann, ob es zu dem betreffenden Server-Endgerät 4 Kontakt aufnehmen will. Bei der in Fig. 7 dargestellten Ausführungsform hat die Übersendung von Kontaktprofilen 18 von einem Server-Endgerät 4 zu einem Client-Endgerät 3 noch eine weitere Funktion, nämlich die Weiterpropagierung (und damit auch Vervielfältigung) von Kontaktprofilen 18. Wie in Fig. 4 anhand des Speichers 39 für Weiterleitungsprofile erläutert wurde, übergibt die Client-Applikation 27 Weiterleitungsprofile über diesen Speicher 39 an die Server-Applikation 28, die diese dann wiederum an weitere anfragende Client-Endgeräte weitergibt. Da diese weitergegebenen Kontaktprofile 18 im allgemeinen keine "eigenen" Kontaktprofile 18 sein werden, werden sie auch als "Fremdprofile" bezeichnet. Bei einigen Ausführungsformen werden sämtliche erhaltenen Profile 18 bedingungslos weitergegeben, bei anderen Ausführungsformen hingegen erfolgt die Weitergabe nur, wenn bestimmte Bedingungen erfüllt sind. Beispielsweise werden nur Profile 18 weitergegeben, welche zu einem bestimmten Profiltyp gehören, oder deren Alter seit der Einrichtung oder letzten Aktualisierung einen gewissen Grenzwert nicht überschreitet, etc. Bei anderen Ausführungsformen ist eine andere Art von Weitergabebedingung gesetzt, und zwar erfolgt die Weitergabe nur innerhalb eines Netzwerks von Freunden oder Freundesfreunden. Hierzu wird in einer im eigenen Gerät gespeicherten Liste von "Freunden" (also vertrauenswürdigen Empfängern) geprüft, ob ein potentieller Empfänger in dieser Liste enthalten ist; die Weiterleitung erfolgt nur an solche gelisteten Empfänger.

Bei der in Fig. 7 gezeigten Ausführungsform ist auch ein stationärer Profilverbreitungsserver 43 vorgesehen, welcher eine große Zahl von abrufbaren Kontaktprofilen 18 einer Vielzahl von Teilnehmern des Kontaktvermittlungssystems (also "Fremdprofile") enthält. Kommt ein Endgerät 2 mit Client-Funktion in die Reichweite des stationären Profilservers 43, so kann sich das Endgerät 2 eine große Zahl solcher Kontaktprofile laden. Die Anwendung eines solchen Verbreitungsservers 43 läßt sich somit beschleunigend auf die Verbreitung von Fremdprofilen aus.

Die beschriebenen Ausführungsformen zeigen ein Kontaktvermittlungssystem, bei welchem die Kontaktvermittlungskommunikation mit relativ geringer Verkehrslast durchgeführt werden kann.

Alle Publikationen und existierende Systeme, die in dieser Beschreibung genannt sind, werden per Bezugnahme in diese einbezogen.

Obgleich hier bestimmte Produkte, die in Übereinstimmung mit den Lehren der Erfindung gebaut wurden, beschrieben worden sind, ist der Schutzbereich dieses Patents nicht hierauf beschränkt. Im Gegenteil, das Patent deckt alle Ausführungsformen der Lehren der Erfindung ab, die wörtlich oder unter der Äquivalenzdoktrin in den Schutzbereich der angefügten Ansprüche fallen.

## Patentansprüche

1. Kontaktvermittlungssystem (1), gebildet aus zwei oder mehr Mobilkommunikations-Endgeräten (2),
die dazu eingerichtet sind, wenn sie in gegenseitige Reichweite gelangen, über direkten Funkkontakt in Ad-hoc-Kommunikation zu treten, bei welcher ein oder mehrere Kurzprofile (16) vom einen zum anderen Endgerät (2) übersendet werden, wonach eine Akzeptanzprüfung des oder der gesendeten Kurzprofile (16) erfolgt und, bei deren positivem Ausgang, eine weitergehende Kommunikation veranlaßt wird,
**dadurch gekennzeichnet, daß**
die Endgeräte (2) für eine Dienstentdeckung gemäß eines Dienstentdeckungsprozesses eingerichtet sind,
und daß die Übersendung des oder der Kurzprofile (16) im Rahmen des Dienstentdeckungsprozesses als Dienstattributdaten in Antwort auf den Erhalt einer Dienstanfrage (15) erfolgt.

2. Kontaktvermittlungssystem nach Anspruch 1, wobei in der Kontaktvermittlung wenigstens eines der Endgeräte (2) die Funktion eines Servers (3) und wenigstens eines der Endgeräte (2) die Funktion eines Clients (4) hat.

3. Kontaktvermittlungssystem nach Anspruch 2, wobei die Endgeräte (2) sowohl für die Clientfunktion als auch die Serverfunktion gleichzeitig eingerichtet sind und durch verschiedene Prozesse, durch einen Client- (27) und einen Serverprozeß (28) realisiert werden, wobei diese Prozesse (27, 28) nebenläufig sind.

4. Kontaktvermittlungssystem nach einem der Ansprüche 1 bis 3, wobei die Mobilkommunikations-Endgeräte (2) zur Funkkommunikation in einem oder mehreren zellulären Mobilfunknetzen ausgebildet sind, und wobei die Fähigkeit zum direkten Funkkontakt eine Zusatzfunktion dieser zellulären Mobilfunk-Endgeräte (2) ist.

5. Kontaktvermittlungssystem nach einem der Ansprüche 1 bis 4, wobei die Endgeräte (2) zur direkten Funkkommunikation auf der Grundlage eines Bluetooth-Protokolls ausgebildet sind.

6. Kontaktvermittlungssystem nach Anspruch 5, wobei der Dienstentdeckungsprozess das Bluetooth-Service-Discovery-Protocol ist.

7. Kontaktvermittlungssystem nach einem der Ansprüche 1 bis 6, wobei die Endgeräte (2) zur direkten Funkkommunikation auf der Grundlage eines Wireless-LAN-Protokolls ausgebildet sind.

8. Kontaktvermittlungssystem nach einem der Ansprüche 2 bis 7, wobei Endgeräte mit Clientfunktion (3) dazu eingerichtet sind, laufend Anwesenheitsanfragen (13) auszusenden, um in Reichweite befindliche andere Endgeräte (2) zu entdecken.

9. Kontaktvermittlungssystem nach Anspruch 8, wobei das Endgerät mit Clientfunktion (3) die Zeitabstände zwischen den Anwesenheitsanfragen (13) zufallsvariiert.

10. Kontaktvermittlungssystem nach Anspruch 8 oder 9, wobei das Client-Endgerät (3) dazu eingerichtet ist, nach Entdeckung eines anderen Endgeräts (2) aufgrund dessen Antwort auf die Anwesenheitsanfrage (13) an dieses die Dienstanfrage (15) zu senden, woraufhin dieses entdeckte Endgerät (2) als Server das oder die bei ihm gespeicherten Kurzprofile als Dienstattributdaten an das Client-Endgerät (3) übersendet.

11. Kontaktvermittlungssystem nach einem der Ansprüche 1 bis 10, wobei die Endgeräte (2) bei der Sendung der Dienstanfrage (15) und Rücksendung des oder der Kurzprofile (16) als Dienstattributdaten nicht gepaart sind.

12. Kontaktvermittlungssystem nach einem der Ansprüche 2 bis 11, wobei das als Client (3) fungierende Endgerät so eingerichtet ist, daß es nach Erhalt des oder der Kurzprofile (16) vom Server-Endgerät (4) die Akzeptanzprüfung durch Vergleich mit im Client-Endgerät (3) gespeicherter Profilinformation durchführt.

13. Kontaktvermittlungssystem nach Anspruch 12, wobei die Akzeptanzprüfung erfolgt, indem das Client-Endgerät (3) das oder die vom Server-Endgerät (4) empfangenen Kurzprofile (16) mit eigenen Kurzprofilen vergleicht.

14. Kontaktvermittlungssystem nach Anspruch 13, wobei der Kurzprofilvergleich eine Identitätsprüfung, Komplementaritätsprüfung, Ähnlichkeitsprüfung oder eine aus zwei oder mehreren dieser Prüfungen gebildeten Hybridprüfung der ganzen oder teilweisen Kurzprofile (16) umfaßt.

15. Kontaktvermittlungssystem nach Anspruch 13 oder 14, wobei der Kurzprofilvergleich einen Profilversionsvergleich umfaßt, um bereits früher erhaltenen Kurzprofile (16) zu erkennen.

16. Kontaktvermittlungssystem nach einem der Ansprüche 2 bis 15, wobei nach positivem Ausgang der Akzeptanzprüfung eine Paarung von Client-Endgerät (3) und Server-Endgerät (4) hergestellt wird.

17. Kontaktvermittlungssystem nach einem der Ansprüche 2 bis 16, wobei die Kurzprofile (16) Kontaktprofile (18) repräsentieren, und die weitergehende Kommunikation die Übersendung desjenigen Kontaktprofils (18) umfaßt, dessen zugehöriges Kurzprofil (16) die Akzeptanzprüfung bestanden hat.

18. Kontaktvermittlungssystem nach einem der Ansprüche 2 bis 17, wobei die Übersendung des Kontaktprofils (18) **dadurch** erfolgt, daß das als Client (3) fungierende Endgerät an das als Server (4) fizngierende Endgerät eine Aufforderung zur Übersendung des besagten Kontaktprofils (18) sendet, und das Server-Endgerät als Antwort auf diese Aufforderung das betreffende Kontaktprofil an das Client-Endgerät sendet.

19. Kontaktvermittlungssystem nach Anspruch 18, wobei das als Client (3) fungierende Endgerät das erhaltene Kontaktprofil (18) einer Kontaktaufnahmeprüfung unterzieht, und bei deren positiven Ausgang eine eigentliche Kontaktaufnahme veranlaßt.

20. Kontaktvermittlungssystem nach Anspruch 19, wobei die eigentliche Kontaktaufnahme auf einem oder mehreren der folgenden Wege erfolgt: Sprachkontaktaufnahme mit dem Server-Endgerät (4) über die Direktfunkkommunikation, Sprachkontaktaufnahme mit dem Server-Endgerät (4) oder einem anderen Endgerät über Zellularfunkkommunikation, Übersendung einer Nachricht an das Server-Endgerät (4) über Direktfunkkommunikation, Übersendung einer Nachricht an das Server-Endgerät (4) oder ein anderes Endgerät über Zellularfunkkommunikation, Übersendung einer Nachricht an einen Chiffre-Service (9) über Zellularfunkkommunikation.

21. Kontaktvermittlungssystem nach einem der Ansprüche 1 bis 20, wobei das ein Kontaktprofil (18) repräsentierende Kurzprofil (16) fest durch das dem Kontaktprofil (18) zugrundeliegende Profilschema (11) definiert ist, ohne von vom Nutzer in das Kontaktprofil (18) eingegebenen oder vom Endgerät (2) im Kontaktprofil (18) erzeugten Werten abhängig zu sein.

22. Kontaktvermittlungssystem nach einem der Ansprüche 1 bis 20, wobei das ein Kontaktprofil (18) repräsentierende Kurzprofil (16) teilweise von vom Nutzer in das Kontaktprofil (18) eingegebenen oder vom Endgerät (2) im Kontaktprofil (18) erzeugten Werten abhängig ist.

23. Kontaktvermittlungssystem nach Anspruch 22, wobei das Endgerät (2) dazu ausgebildet ist, die besagten, vom Nutzer eingegebenen Werte in das diese repräsentierende Kurzprofil (16) zu codieren.

24. Kontaktvermittlungssystem nach einem der Ansprüche 1 bis 23, wobei die Kontaktprofile in einer Syntax einer Auszeichnungssprache vorliegen, und das zugehörige vordefinierte Profilschema in Form einer Dokumenttyp- oder Schemadefinition gegeben sind.

25. Kontaktvermittlungssystem nach einem der Ansprüche 4 bis 24, bei welchem die Endgeräte (2) dazu ausgebildet sind, daß Profilschemas (11), welche Kontaktprofile (18) vordefinieren, über ein zelluläres Mobilfunknetz herunterladbar sind, und daß nach Herunterladung eines Profilschemas (11) vom Benutzer zur Erstellung eines benutzerindividuellen Kontaktprofils (18) in dieses individuelle Werte eintragbar sind.

26. Kontaktvermittlungssystem nach einem der Ansprüche 1 bis 25, wobei die Endgeräte (2) dazu ausgebildet sind, von andern Nutzern stammende Profile (18), sog. Fremdprofile, aufzunehmen und an weitere Nutzer weiter zu propagieren.

27. Kontaktvermittlungssystem nach Anspruch 26, wobei es sich bei den im Endgerät (2) gespeicherten Fremdprofilen (18) um Profile handelt, die bei vorausgegangenen Kontaktvermittlungen von anderen Endgeräten (2) erhalten wurden.

28. Kontaktvermittlungssystem nach Anspruch 26 oder 27, wobei es sich bei den Fremdprofilen (18) um Profile handelt, die von einem Fremdprofil-Verbreitungsgerät (43) empfangen wurden.

29. Mobilkommunikations-Endgerät (1), ausgebildet zur Teilnahme in einem Kontaktvermittlungssystem (1) gemäß einem der Ansprüche 1 bis 28.

30. Computerprogramm, gespeichert auf einem Datenträger oder vorliegend in Form einer Signalfolge, welche zur Übersendung an in ein Mobilkommunikations-Endgerät (2) geeignet ist, welches beim Ablauf auf einem Mobilkommunikations-Endgerät (2) diesem die Funktion eines Endgeräts (2) in einem Kontaktvermittlungssystem (1) gemäß einem der Ansprüche 1 bis 28 verleiht.
